# EUROPEAN PATENT SPECIFICATION

(11) **EP 2 213 425 B1**
(45) Date of publication and mention of the grant of the patent: **25.06.2014**
(21) Application number: 08853361.7
(22) Date of filing: 15.10.2008
(51) Int. Cl.: B25J 9/06, B25J 17/00, B25J 19/00

(54) **VERTICAL MULTI-JOINT ROBOT**
VERTIKALER MEHRGELENKROBOTER
ROBOT VERTICAL A PLUSIEURS ARTICULATIONS

(30) Priority: 26.11.2007 JP 2007305001; 12.03.2008 JP 2008062522
(43) Date of publication of application: 04.08.2010
(73) Proprietor: Kabushiki Kaisha Yaskawa Denki, Kitakyushu-shi, Fukuoka 806-0004 (JP)
(72) Inventor: YONEHARA, Keisuke, Kitakyushu-shi, Fukuoka 806-0004 (JP); SANADA, Takashi, Kitakyushu-shi, Fukuoka 806-0004 (JP); SHIRAKI, Tomoyuki, Kitakyushu-shi, Fukuoka 806-0004 (JP); KAGAWA, Ryuta, Kitakyushu-shi, Fukuoka 806-0004 (JP); HATANAKA, Takashi, Kitakyushu-shi, Fukuoka 806-0004 (JP)
(74) Representative: Gendron, Vincent Christian
(86) International application number: PCT/JP2008/068627
(87) International publication number: WO 2009/069389

(56) References cited:
- WO-A1-2004/069493
- JP-A- 2 298 482
- JP-A- S6 270 913
- JP-A- H02 298 482
- JP-A- H05 504 101
- JP-A- H06 190 769
- JP-A- H07 256 584
- JP-A- H10 175 188
- JP-A- S61 192 487
- JP-A- S62 277 292
- JP-A- 2003 136 444
- JP-U- H0 297 592
- US-A- 4 973 215

## Description

### Technical Field

The present invention relates to a vertical articulated robot having a redundant axis.

### Background Art

Recent industrial robots are required to perform processes of welding, applying sealing agents, assembling parts, etc., by inserting a wrist assembly, which holds an operating tool, and a part of an arm supporting the wrist assembly into, for example, an automobile body. Therefore, there have been demands for robots that have smaller wrist portions and arms with smaller diameters and that are capable of performing high-speed, high-precision operations. In addition, in a conventional multi-joint robot placed on a surface, such as a floor surface, a plane including an upper arm and a front arm is always in a vertical orientation, and there is a risk that the arms will interfere with an obstacle or the like placed on an approach route thereof, depending on an area into which the arms are to be inserted in the operation. Therefore, it is desirable to increase the flexibility of movement of the arms such that the orientation of the plane including the upper arm and the front arm can be changed to an arbitrary orientation, such as a horizontal orientation.

In addition, the industrial robots are and have been required to complete the processes of welding, applying sealing agents, assembling parts, etc., in a shorter time to increase the process throughput and comply with the increase in the numbers of products to be produced and production steps. The requirement regarding the throughput is not only to complete each production step in a short time but also to allow maintenance of the robot, which is operated around the clock, to be completed in a short time. To improve the productivity, it is important to increase the operating time of the robot and complete each production step in a short time.

In recent manufacturing lines including industrial robots, the robots are collectively arranged to reduce the space for the manufacturing processes. However, a conventional industrial robot that does not have a redundant axis cannot bring a tool provided at a wrist axis of the robot to a position near the robot itself. Therefore, even when multiple robots are collectively arranged, the robots cannot perform processes in areas near themselves and operating areas cannot be increased. To overcome such a problem, robots having redundant axes have been developed. Additionally, there has been a demand for a robot capable of performing an operation in an area close to the robot itself in consideration of an arm length.

The industrial robots capable of moving flexibly are required to perform complex movements in an environment where the robots are densely arranged, and accordingly the industrial robots have complex structures. On the contrary, the robots are also required to allow easy maintenance.

As an example of a vertical articulated robot according to the related art, a seven-degree-of-freedom robot with which the problem of flexibility can be solved has been proposed (see, for example, Patent Document 1). This vertical articulated robot includes a base; a turning base provided on the base so as to be pivotable about a first rotation axis; a first upper arm provided on the turning base so as to be turnable about a second rotation axis that is in a plane perpendicular to the first rotation axis; a second upper arm provided on a distal end portion of the first upper arm so as to be pivotable about a third rotation axis that is perpendicular to the second rotation axis; a front arm provided on a distal end portion of the second upper arm so as to be turnable about a fourth rotation axis that is in a plane perpendicular to the third rotation axis; a wrist assembly mounted on a distal end portion of the front arm; and motors that rotate the first upper arm, the second upper arm, and the front arm about the respective rotation axes.

The seven-degree-of-freedom vertical articulated robot according to the related art is capable of avoiding interference with a workpiece or peripheral devices and interference between the arms, and the operating area around the robot can be effectively utilized. A Japanese Patent document JP 2298482 A discloses a vertical articulated robot.

[Patent Document 1] Japanese Patent No. 2585425 (page 4 and Figs. 3 and 4)

### Disclosure of Invention

### Problems to be Solved by the Invention

In the vertical articulated robot according to the related art, the drive motor for turning the second upper arm is disposed in the second upper arm 103. Alternatively, an inner stator and an outer rotor of the drive motor for the second upper arm are fixed to the first upper arm and the second upper arm, respectively. The second upper arm is turned about the third rotation axis that is perpendicular to the second rotation axis. Therefore, the drive motor cannot be replaced unless the second upper arm is separated from the robot, and there is a problem that it takes a long time to replace the drive motor. Even if it is not necessary to replace the drive motor, it is necessary to regularly apply grease to a reduction gears. Also in this case, it is necessary to separate the second upper arm from the robot. If it is necessary to perform a major process such as separation of the second upper arm in the maintenance operation, a long maintenance time is necessary and the manufacturing line must be stopped during the maintenance time. Therefore, there is a problem that the productivity will be reduced.

When the drive motor is replaced with another drive motor, the first upper arm and the second upper arm are separated from each other. Therefore, the first and second upper arms may become mechanically displaced from each other. In such a case, to correct the displacement, it is necessary to teach trajectories to the robot again. In general, it takes several hours to teach a single robot; therefore, it may take days to teach several tens of robots included in a manufacturing line. During that time period, the manufacturing line must be stopped, which leads to a reduction in productivity.

Since the drive motors are disposed in the arms, wiring lines for respective axes are connected to the motors in the arm bodies. However, there is a risk that the wiring lines will break when the arms rotate. To repair or replace the broken cables, it is necessary to disassemble the robot. In such a case, a long maintenance time is necessary and the manufacturing line will be stopped.

In view of the above-described problems, an object of the present invention is to provide a vertical articulated robot in which a drive motor or a cable can be replaced in a short time, which can readily correct mechanical displacements, and which can perform an operation in an area near the robot.

### Means for Solving the Problems

To solve the above-described problems, according to the present invention, the following structures are provided.

According to the invention of claim 1, a vertical articulated robot includes a base; a turning base provided on the base so as to be pivotable about a first rotation axis; a first upper arm provided on the turning base so as to be turnable about a second rotation axis that is in a plane perpendicular to the first rotation axis; a second upper arm provided on a distal end portion of the first upper arm so as to be pivotable about a third rotation axis that is perpendicular to the second rotation axis; a front arm provided on a distal end portion of the second upper arm so as to be turnable about a fourth rotation axis that is in a plane perpendicular to the third rotation axis; a wrist assembly mounted on a distal end portion of the front arm; and motors that rotate the first upper arm, the second upper arm, the front arm, and the wrist assembly about the respective rotation axes. The motor that rotates the second upper arm is mounted on a frame of the second upper arm such that the motor is exposed to the outside.

According to the invention of claim 2, in the state in which the first upper arm is in a vertical orientation, the motor that rotates the second upper arm is mounted on the frame of the second upper arm such that a rotating shaft of the motor extends perpendicular to a ground surface and such that an output shaft of the motor faces toward the ground surface.

According to the invention of claim 3, in the state in which the first upper arm is in a vertical orientation, the motor that rotates the second upper arm is mounted on a rear surface of the frame of the second upper arm such that a rotating shaft of the motor extends parallel to a ground surface.

According to the invention of claim 4, the distal end portion of the first upper arm is provided with a reduction gears that rotates the second upper arm and is formed in an inverted L-shape.

According to the invention of claim 5, the second upper arm is provided with the motor that rotates the second upper arm and is formed in an L-shape.

According to the invention of claim 6, in the case where the robot is to perform an operation in an operating area that is distant from the robot, a length of the first upper arm is determined on the basis of a distance to the operating area. In the case where the robot is to perform an operation in an operating area that is near the robot, the length of the first upper arm is determined such that a process of replacing a motor unit can be performed without causing an interference between the motor unit and an upper end portion of the first upper arm.

According to the invention of claim 7, in the case where the robot is to perform an operation in an operating area that is distant from the robot, a length of the second upper arm is determined on the basis of a distance to the operating area. In the case where the robot is to perform an operation in an operating area that is near the robot, the length of the second upper arm is determined such that a process of replacing a motor unit can be performed without causing an interference between the motor unit and the motor that drives the front arm.

According to the invention of claim 8, in the state in which the first upper arm is in a vertical orientation, the motor that rotates the second upper arm is mounted on the frame of the second upper arm such that a rotating shaft of the motor extends perpendicular to a ground surface and such that an output shaft of the motor faces toward the ground surface. The output shaft of the motor is provided with an input gear that meshes with the reduction gears provided on the first upper arm.

According to the invention of claim 9, the motor that rotates the second upper arm is, the motor that rotates the second upper arm is mounted on a rear surface of the frame of the second upper arm such that a rotating shaft of the motor extends parallel to a ground surface. Power is transmitted through a bevel gear train between an output shaft of the motor and a reduction gears provided on the first upper arm.

According to the invention of claim 10 a vertical articulated robot includes a base; a turning base provided on the base so as to be pivotable about a first rotation axis; a first upper arm provided on the turning base so as to be turnable about a second rotation axis that is in a plane perpendicular to the first rotation axis; a second upper arm provided on a distal end portion of the first upper arm so as to be pivotable about a third rotation axis that is perpendicular to the second rotation axis; a front arm provided on a distal end portion of the second upper arm so as to be turnable about a fourth rotation axis that is in a plane perpendicular to the third rotation axis; a wrist assembly mounted on a distal end portion of the front arm; and motors that rotate the first upper arm, the second upper arm, the front arm, and the wrist assembly about the respective rotation axes. A wire body that extends from the turning base is arranged so as to extend along a side surface of the first upper arm, is fixed to the side surface of the first upper arm at a central section of the first upper arm, is bent horizontally onto a rear surface of the first upper arm, and is fixed to the rear surface of the first upper arm at an upper end position of the first upper arm. The wire body is bent vertically in a U-shape so as to extend along a side surface of the second upper arm, is fixed to the second upper arm at a lower end position of the second upper arm, is bent horizontally so as to extend along another side surface of the second upper arm, is bent vertically at the center of the another side surface of the second upper arm, is fixed to the second upper arm at a central section of the second upper arm, is fixed to the front arm at a lower end position of the front arm, and extends into the front arm.

### Advantages

According to the invention described in claims 1 to 9, since the robot has a redundant axis, processes of welding, applying sealing agents, assembling parts, etc., can be performed without causing an interference with an obstacle. Therefore, the versatility of the manufacturing line can be increased. In addition, since the motor that drives the second upper arm is mounted on the frame of the second upper arm, the motor is exposed to the outside. Therefore, the motor can be readily replaced with another motor and the time required for the replacing process can be reduced.

In addition, since the motor replacing process can be performed simply by removing the motor, it is not necessary to remove the arms. Therefore, no mechanical displacements occur between the arms, and it is not necessary to teach trajectories to the robot again when the robot is operated after the motor replacing process. As a result, the manufacturing line can be restored in a short time.

As described above, since the motor can be replaced with another motor in a short time, the operating time of the robot can be increased and the productivity can be improved.

In addition, according to the invention described in claims 6 and 7, a minimum length of the first upper arm or the second upper arm is determined as a length at which a drive motor and a motor unit arranged on the first upper arm or the second upper arm can be prevented from interfering with another component. Therefore, the tool attached at the wrist axis of the robot can be brought close to the robot itself.

According to the invention described in claim 10, a transmission line connected to the drive motors or the operating tool provided at the wrist axis is arranged such that the transmission line does not protrude outward from the robot irrespective of the operational state. Therefore, the size of the robot can be set to a minimum size and maintenance of wiring lines can be facilitated at the same time.

### Brief Description of Drawings

[Fig. 1] Fig. 1 shows a side view and a front view of a first embodiment of the present invention.
[Fig. 2] Fig. 2 is a top view illustrating a wrist assembly according to the first embodiment of the present invention.
[Fig. 3] Fig. 3 is a sectional view of a second upper arm according to the first embodiment of the present invention.
[Fig. 4] Fig. 4 is a side view illustrating the arrangement of a wire body according to the first embodiment of the present invention.
[Fig. 5] Fig. 5 is a rear view illustrating the arrangement of the wire body according to the first embodiment of the present invention.
[Fig. 6] Fig. 6 is a side view illustrating the arrangement of the wire body according to the first embodiment of the present invention in the state in which a third rotation axis is rotated by 90 degrees.
[Fig. 7] Fig. 7 is a rear view illustrating the arrangement of the wire body according to the first embodiment of the present invention in the state in which the third rotation axis is rotated by 90 degrees.
[Fig. 8] Fig. 8 is a rear view illustrating the arrangement of wire bodies according to the first embodiment of the present invention.
[Fig. 9] Fig. 9 is a side view illustrating the arrangement of the wire bodies according to the first embodiment of the present invention.
[Fig. 10] Fig. 10 is a side view illustrating the arrangement of the wire bodies according to the first embodiment of the present invention in the state in which a front arm is tilted downward.
[Fig. 11] Fig. 11 is a side view illustrating the arrangement of the wire bodies according to the first embodiment of the present invention in the state in which the front arm is tilted upward.
[Fig. 12] Fig. 12 is a side view illustrating the arrangement of the wire bodies according to the first embodiment of the present invention in the state in which the third rotation axis is rotated by 0 degrees.
[Fig. 13] Fig. 13 is a top view illustrating the arrangement of the wire bodies according to the first embodiment of the present invention in the state in which the third rotation axis is rotated by 0 degrees.
[Fig. 14] Fig. 14 is a side view illustrating the arrangement of the wire bodies according to the first embodiment of the present invention in the state in which the third rotation axis is rotated by 90 degrees.
[Fig. 15] Fig. 15 is a top view illustrating the arrangement of the wire bodies according to the first embodiment of the present invention in the state in which the third rotation axis is rotated by 90 degrees.
[Fig. 16] Fig. 16 is a side view of a seven-degree-of-freedom vertical articulated robot according to a second embodiment of the present invention.
[Fig. 17] Fig. 17 shows a side view and a top view of a seven-degree-of-freedom vertical articulated robot according to a third embodiment of the present invention. Reference Numerals

- 1: base
- 2: turning base
- 3, 6, 9, 12, 18, 19, 20: reduction gears
- 4, 7, 10, 13, 15: drive motor
- 4-1, 7-1, 10-1, 13-1: output shaft
- 5: first upper arm
- 8: second upper arm
- 9-1: gear
- 7A, 10A: motor unit
- 10-2: input gear
- 11: front arm
- (1) to (7): rotation axis
- 14: wrist assembly
- 16: support
- 21: flange
- 22: wrist
- 22a, 22b: member
- 23: wrist base
- 23a, 23b: member
- 31: wire body
- 311: robot wire body
- 312: tool wire body
- 32: support
- K1 to K5: fixing clamp

### Best Modes for Carrying Out the Invention

Embodiments of the present invention will be described with reference to the drawings.

### First Embodiment

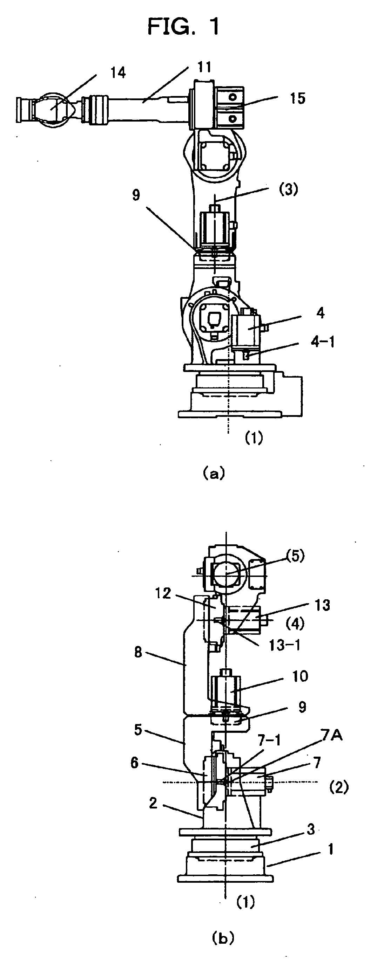

Fig. 1 shows a seven-degree-of-freedom vertical articulated robot according to an embodiment of the present invention, where (a) is a side view and (b) is a front view of the robot. In the figure, a rotation axis (1) is perpendicular to the ground surface. A turning base 2 is provided with a turning drive motor 4 attached thereto, and an output shaft 4-1 of the turning drive motor 4 is connected to an input shaft of a reduction gears 3. The reduction gears 3 is a turning reduction gears and is supported by a robot base 1 and the turning base 2 such that the base 1 and the turning base 2 are relatively pivotable. The turning base 2 and the reduction gears 3 are arranged on the rotation axis (1).

A drive motor 7 for a first upper arm 5 is arranged on a second rotation axis (2) in an opening provided in the above-described turning base 2. The second rotation axis (2) is in a plane perpendicular to the rotation axis (1).

An output shaft 7-1 of the drive motor 7 for the first upper arm 5 is connected to an input shaft of a reduction gears 6 for the first upper arm 5. The reduction gears 6 for the first upper arm is secured to both the opening in the turning base 2 and a side surface of the first upper arm 5, and is supported so as to be turnable about the second rotation axis (2).

The first upper arm 5 has an inverted L shape such that an L-shaped member is vertically inverted. An upper end portion of the first upper arm 5 supports a second upper arm 8 with a reduction gears 9 interposed therebetween. The reduction gears 9 is arranged on a third rotation axis (3) that is perpendicular to the second rotation axis (2) and that is on the same plate as the first rotation axis (1). The second upper arm 8 is supported so as to be turnable about the third rotation axis (3). With this structure, the drive motor 7 for the first upper arm 5 can be arranged such that the drive motor 7 does not protrude from the robot in the width direction thereof when viewed from the front. In the case where the robot is to perform an operation in an operating area that is distant from the robot, the length of the first upper arm 5 is determined on the basis of the distance to the operating area. In the case where the robot is to perform an operation in an operating area that is near the robot, the length of the first upper arm 5 is determined such that a motor unit 7A can be replaced without causing an interference between the motor unit 7A and the upper end portion of the first upper arm 5.

The second upper arm 8 has an L-shape that is symmetric to the shape of the first upper arm 5, so that a drive motor 10 for the second upper arm can be attached to the second upper arm 8 on the third rotation axis (3). Thus, the drive motor 10 for turning the second upper arm 8 is attached to the second upper arm 8. Since the second upper arm 8 has an L-shape as described above, the drive motor 10 for the second upper arm 8 can be arranged such that the drive motor 10 does not protrude from robot in the width direction thereof when viewed from the front. An output shaft 10-1 of the drive motor 10 for turning the second upper arm 8 is connected to an input shaft of the reduction gears 9 for the first upper arm 8. The reduction gears 9 for the second upper arm 8 is secured to both the upper end portion of the first upper arm 5 and the bottom surface of the second upper arm 8, and is supported so as to be pivotable.

A fourth rotation center (4) is perpendicular to and is on the same plane as the third rotation axis (3). A drive motor 13 and a reduction gears 12 for a front arm 11 are arranged on the fourth rotation axis.

A lower end portion of the front arm 11, which is positioned above the second upper arm 8, is rotatably supported in an upper opening in the second upper arm 8 with the reduction gears 12 provided between the front arm 11 and the second upper arm 8.

An output shaft 13-1 of the drive motor 13 for the front arm 11 is connected to an input shaft of the reduction gears 12 for the front arm 11. The reduction gears 12 for the front arm 11 is secured to both an opening in the front arm 11 and a side surface of the second upper arm 8, and is rotatably supported.

A rotation axis (5) is in a plane that is perpendicular to the rotation axis (4) and on which the third rotation axis (3) is arranged.

An attachment surface on which a drive motor 15 for rotating a wrist assembly 14 about the rotation axis (5) is located at an end of the front arm 11 that is opposite to the wrist assembly 14. The drive motor 15 is connected to an input shaft of a reduction gears provided at an end face of the front arm 11 with a shaft and a gear or a pulley (not shown) provided therebetween. The reduction gears is secured to both the end face of the front arm 11 and an end portion of the wrist assembly 14, and is rotatably supported.

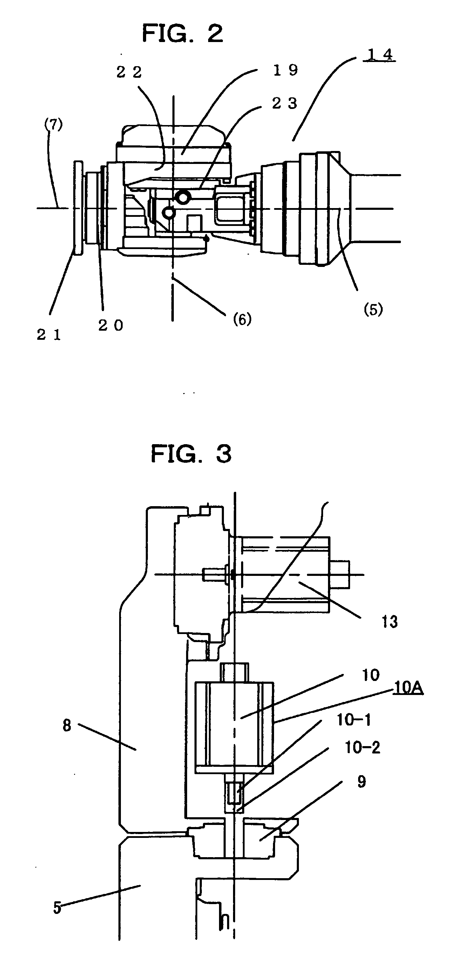

The wrist assembly 14 will be described in detail with reference to Fig. 2. The wrist assembly 14 includes a wrist base 23, a wrist 22, a flange 21, and reduction gearss 19 and 20. An end portion of the wrist 22 is provided on and connected to a distal end portion of the wrist base 23 with the reduction gears 19 provided therebetween such that the wrist 22 is turnable about a sixth rotation axis (6) that is perpendicular to and is on the same plane as the fifth rotation axis (5). An end portion of the flange 21 is provided on and connected to a distal end portion of the wrist 22 with the reduction gears 20 provided therebetween such that the flange 21 is turnable about a seventh rotation axis (7) that is perpendicular to the sixth rotation axis (6). A drive motor (not shown) for the wrist 22 shown in Fig. 1 and a drive motor for the flange are connected to input shafts of the reduction gearss 19 and 20, respectively, through shafts and gears or pulleys (not shown).

Fig. 3 shows the state in which the drive motor 10 for the second upper arm 8 is detached from the second upper arm 8 to replace the drive motor 10 with another motor. Referring to the figure, the output shaft 10-1 and an input gear 10-2 of the drive motor 10 are fastened to the drive motor 10 for the second upper arm 8 at an end thereof to form a motor unit 10A. An attachment surface of the drive motor 10 is arranged such that the motor unit 10A can be completely separated from the reduction gears 9 without causing an interference between with the front arm 11 or the front-arm drive motor 13 disposed at the bottom of the front arm 11. In the case where the robot is to perform an operation in an operating area that is distant from the robot, the length of the second upper arm 8 is determined on the basis of the distance to the operating area. In the case where the robot is to perform an operation in an operating area that is near the robot, the length of the second upper arm 8 is determined such that the motor unit 10A can be replaced without causing an interference between the motor unit 10A and the front-arm drive motor 13.

Thus, in the case where the robot is to perform an operation in an operating area that is near the robot, the lengths of the first upper arm and the second upper arm can be reduced so that the tool provided at a wrist axis can be brought closer to the robot. As a result, the robot can perform an operation in the area near the robot itself.

The displacements caused by the process of replacing the motor unit 10A can be corrected simply by making an adjustment so that the reduction gears 9 meshes with the input gear 10-2. Therefore, the correction can be performed in a short time. As described above, the drive motor 10 can be replaced simply by detaching the motor unit 10A, and no displacements of the joint axes of the robot occur. Therefore, the process of teaching the robot can be omitted and the manufacturing line can be restored in a short time.

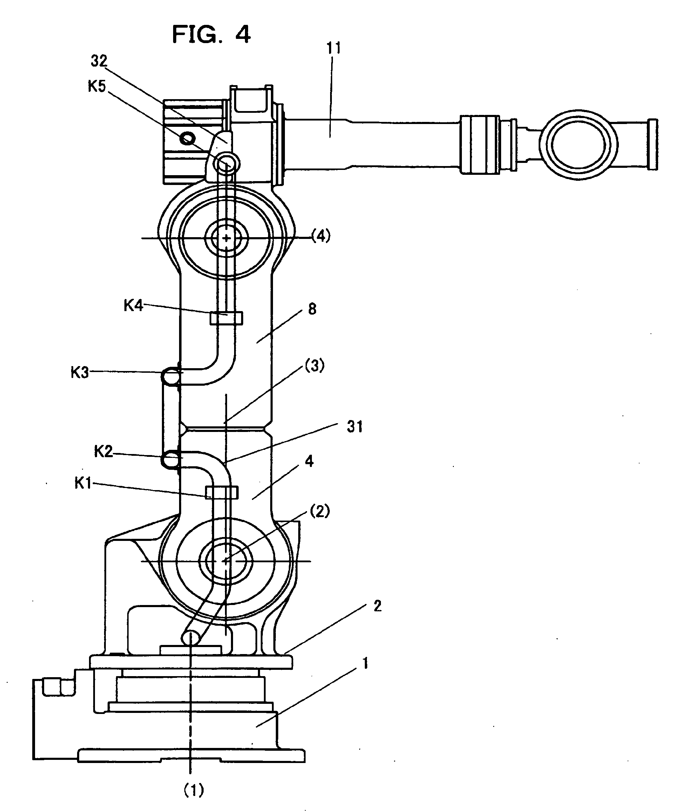

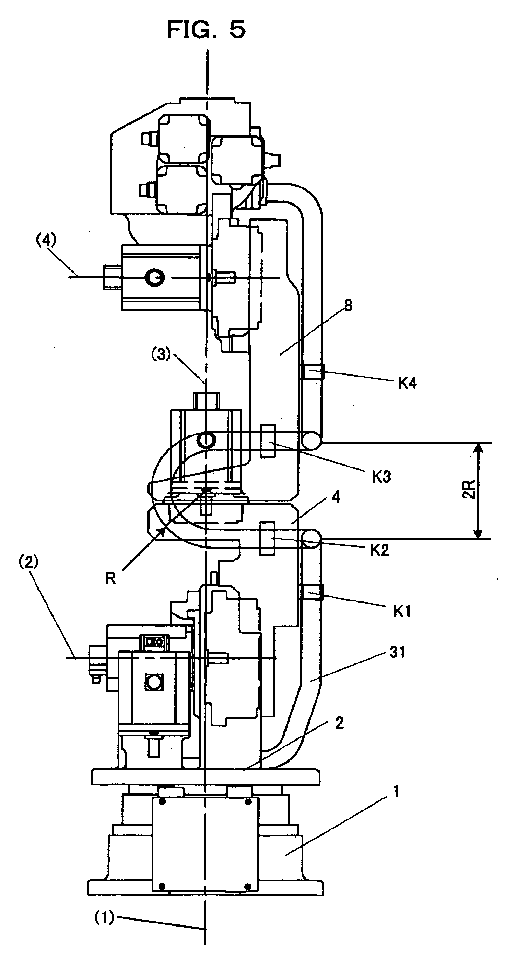

Next, the process of arranging a cable will be described with reference to Figs. 4 and 5. A wire body 31 extends from the robot base 1 into the turning base 2, and is arranged so as to extend along a side surface of the first upper arm 5. The wire body 31 is fixed with a fixing clamp K1 to the side surface of the first upper arm 5 at a central position thereof, and is horizontally bent onto a rear surface of the first upper arm 5 such that a bending radius of the wire body 31 is at a minimum. The wire body 31 is fixed with a fixing clamp K2 to the rear surface of the first upper arm 5 at an upper end section thereof.

Then, the wire body 31 is vertically bent in a U-shape such that the wire body 31 extends along a side surface of the second upper arm 8, and is fixed with a fixing clamp K3 to the second upper arm 8 at a lower end section thereof. At this time, the wire body 31 is formed such that the width thereof is twice the bending radius of the wire body 31 when the bending radius is at a minimum.

Then, the wire body 31 is horizontally bent onto a side surface of the second upper arm 8 such that the bending radius of the wire body 31 is at a minimum, and is vertically bent along the side surface of the second upper arm 8 at a central section thereof. The wire body 31 is fixed with a fixing clamp K4 to the second upper arm 8 at a central position thereof, and is fixed with a fixing clamp K5 provided on a support 16 to the front arm 11 at a lower end section thereof. Then, the wire body 31 is inserted into the front arm 11.

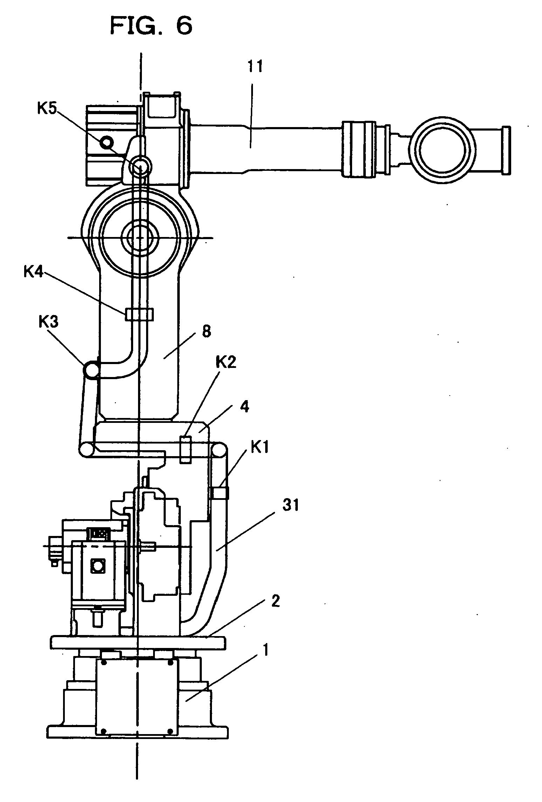

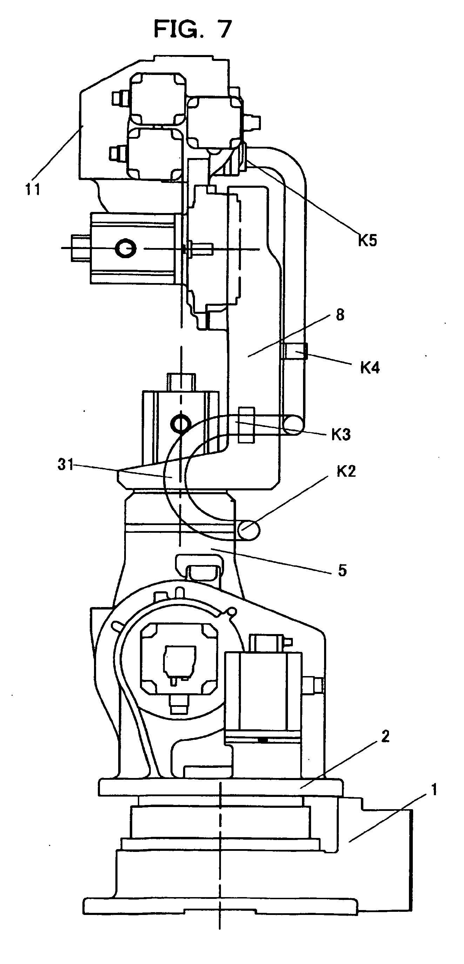

In the case where the wire body 31 is arranged as described above, when the second upper arm 8 is turned about the third rotation axis (3), the wire body 31 moves between the fixing clamp K2 at the upper end section of the first upper arm 5 and the fixing clamp K3 at the lower end section of the second upper arm 8. Assuming that the movable range of the second upper arm 8 is from +90 degrees to -90 degrees, the wire body 31 that is fixed in the above-described manner does not protrude outward or become slack by an excessive amount in the operation of the robot. This will be described with reference to Figs. 6 and 7.

Figs. 6 and 7 are a side view and a rear view, respectively, of the robot in the state in which the third upper arm 8 is turned by 90°. In Figs. 6 and 7, when the second upper arm 8 is turned, the wire body 31 is fixed with the fixing clamp K2 provided at the upper end section of the first upper arm 5 and the fixing clamp K3 provided at the lower end section of the second upper arm 8 such that the wire body 31 is bent so as to extend between the fixing clamp K2 and the fixing clamp K3 along the outer peripheral surfaces of the arms while the width of the wire body 31 is maintained at twice the bending radius of the wire body 31. Since the wire body is fixed so as to extend along the peripheral surfaces of the arms, the amount by which the wire body protrudes outward can be reduced. As a result, the risk that the wire body will protrude outward and interfere with a peripheral device or the robot itself can be reduced.

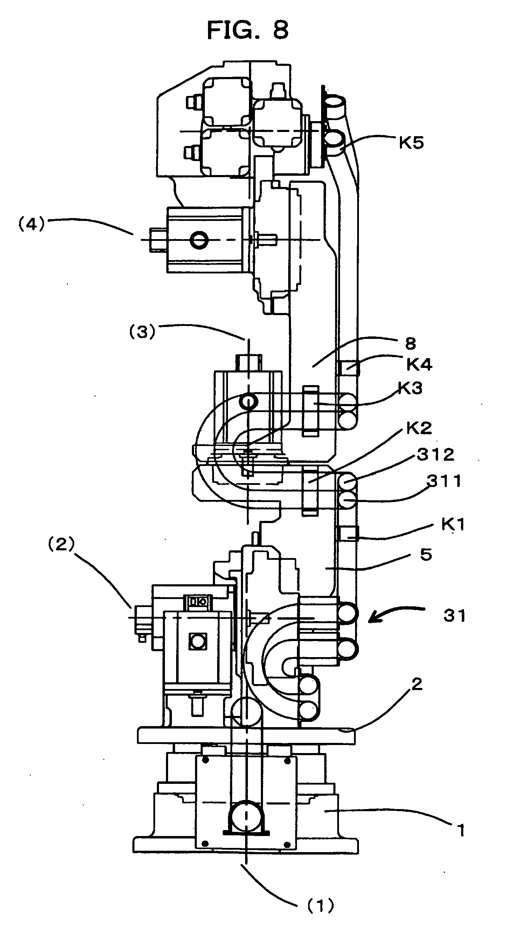

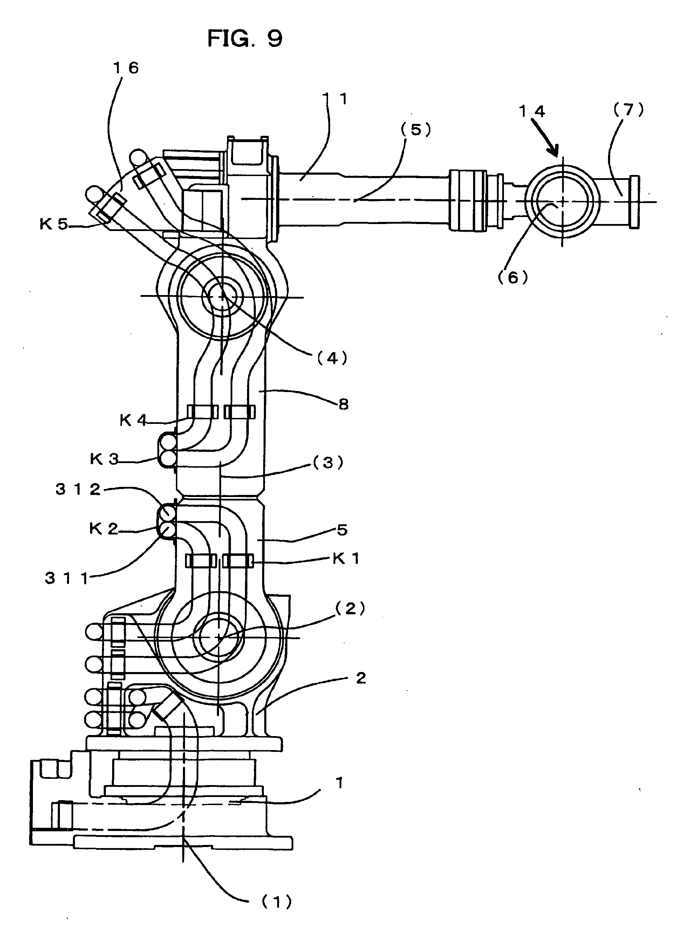

Although the arrangement of a single wire body is described in the above-described embodiment, two or more wire bodies may also be provided. A case in which two wire bodies are arranged will now be described with reference to Figs. 8 and 9. Reference numeral 31 denotes both a wire body for the robot and another wire body, such as a hose of cooling water or a cable for supplying electricity to the drive motors for the respective axes of the robot or a drive motor for a gun or the like (not shown) attached to a distal end portion of the robot.

The wire bodies 31 are fixed to the turning base 2 at an exit section thereof. The wire bodies 31 are arranged so as to extend to a rear section of the turning base 2 and are then bent in a U-shape so that a large bending radius can be obtained during the rotation about the second rotation axis (2). Then, the wire bodies 31 are fixed to a side surface of the turning base 2 at positions separated from the rotation center at the second rotation axis (2). The wire bodies 31 fixed to the side surface of the turning base 2 are arranged so as to extend through an area around the rotation center at the second axis (2) and are fixed with fixing clamps K1 to a side surface of the first upper arm 5 such that the wire bodies 31 extend along the longitudinal direction of the first upper arm 5. Then, the wire bodies 31 are fixed with fixing clamps K2 to a rear section of the first upper arm 5 at the upper end section thereof. The wire bodies 31 fixed to the rear section of the first upper arm 5 are bent in a U-shape and are fixed with fixing clamps K3 to a rear section of the second upper arm 8 at the lower end section thereof. Then, the wire bodies 31 are fixed with fixing clamps K4 to a side surface of the second upper arm 8 such that the wire bodies 31 extend along the longitudinal direction of the second upper arm 8. The wire bodies 31 fixed to the side surface of the second upper arm 8 are arranged so as to extend through an area around the fourth rotation axis (4) and are fixed with fixing clamps K5 to a support 16 which protrudes rearward from a base portion of the front arm 11.

In consideration of the ease of maintenance, at least two wire bodies 31 are provided. The two wire bodies 31 include a robot wire body 311 necessary for driving the robot and a tool wire body 312 necessary for a gun or the like that is attached to an end portion of the robot.

According to the present invention, to reduce the width of robots so that the robots can be densely arranged, the tool wire body 312 is disposed on either the outer side or the inner side of the robot wire body 312 at movable sections of the robot. The method for arranging the wire bodies will now be described.

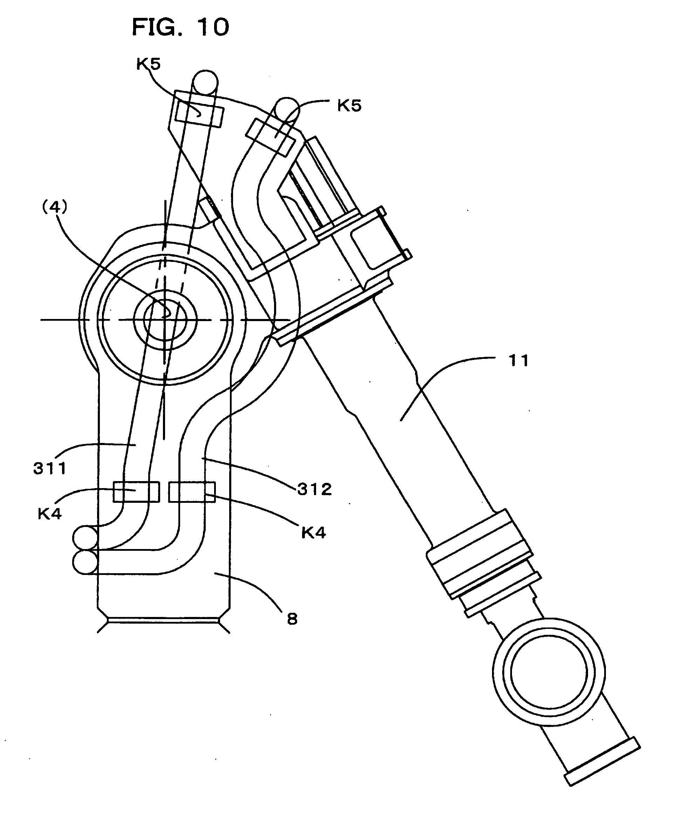

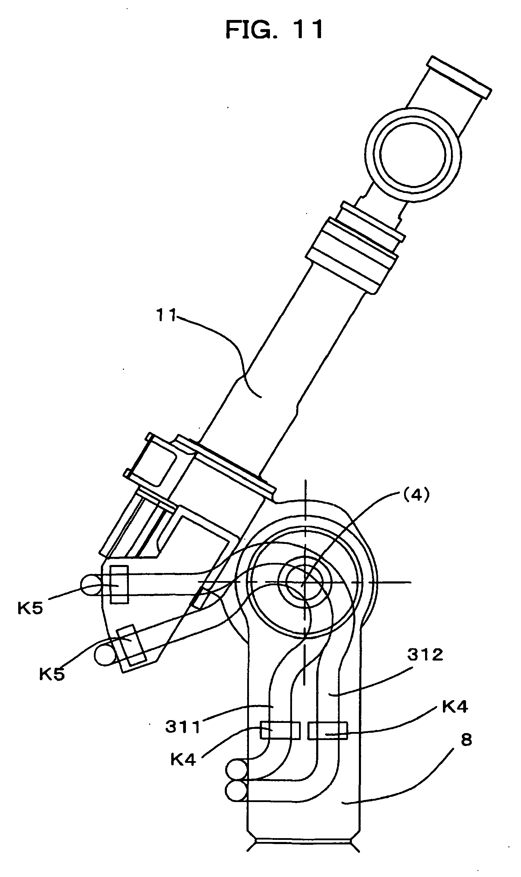

Movements of the wire bodies 31 during the rotation about the fourth rotation axis (4) will be described with reference to Figs. 10 and 11. Movements during the rotation about the second rotation axis are the same as those in the rotation about the fourth rotation axis, and explanations thereof are thus omitted.

Fig. 10 shows the state in which the front arm 11 is tilted downward by a maximum amount, and Fig. 11 shows the state in which the front arm 11 is tilted upward by a maximum amount.

The fixing clamp K5 for the robot wire body 311 is positioned such that the robot wire body 311 extends linearly in the state shown in Fig. 10. Therefore, the wire bodies 31 are bent only in one direction instead of being bent in opposite directions. The length of the wire body 31 between the fixing clamp K4 and the fixing clamp K5 for the robot wire body 311 is determined by the linear length of the robot wire body 311 as shown in Fig. 10, so that there is no loss in the length of the robot wire body 311.

The position and the length of the wire body 31 between the fixing clamp K4 and the fixing clamp K5 for the tool wire body 312 is set such that the tool wire body 312 does not come into contact with the robot wire body 311 and receive a force, such as a compressive force or a tensile force, when the front arm 11 rotates about the fourth rotation axis (4). The tool wire body 312 is fixed by the fixing clamp K5 at a position separated from the robot wire body 311 to prevent a contact therewith. More specifically, the tool wire body 312 is fixed by the fixing clamp K5 at a position separated from the robot wire body 311 by an amount corresponding to the curvature R obtained when the robot wire body 311 is bent as shown in Fig. 11. In addition, the length of the tool wire body 312 between the fixed points thereof is set such that the tool wire body 312 can extend along the outer side of the robot wire body 311 without applying a force to the robot wire body 312 in the state shown in Fig. 11. In such a case, the robot wire body 312 and the tool wire body 312 are prevented from receiving an excessive force, and breakage thereof can be prevented. However, since the tool wire body 312 is longer than the robot wire body 311, the tool wire body 312 becomes slack in the state shown in Fig. 10. Therefore, to prevent breakage due to a local bending caused by an excessive slack, the length of the tool wire body 312 is set in accordance with the movable angle range of the front arm 11 around the fourth rotation axis (4).

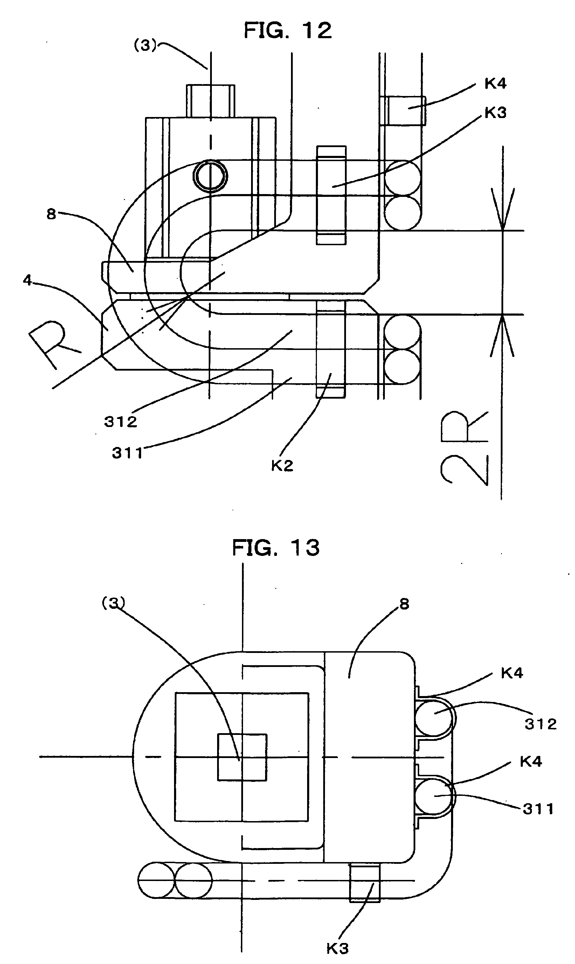

Movements of the cables during the rotation about the third axis will be described with reference to Figs. 12, 13, 14, and 15.

It is assumed that the movable ranges of the second upper arm 8 around the third rotation axis (3) is ±90 degrees.

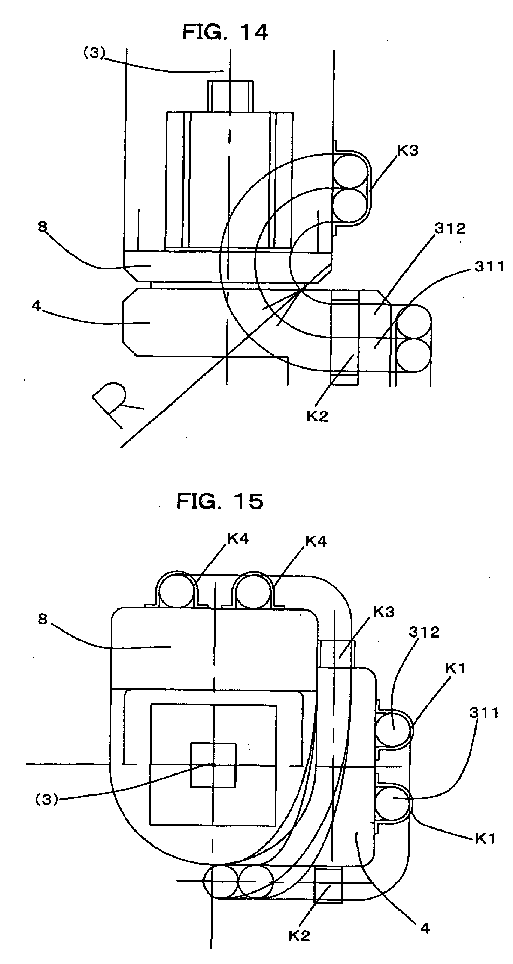

Figs. 12 and 13 are a side view and a top view, respectively, in the case where the rotational angle is 0 degrees. Figs. 14 and 15 are a side view and a top view, respectively, in the case where the rotational angle is 90 degrees.

The position at which the tool wire body 312 is fixed to the second upper arm 8 by the fixing clamp K3 is directly above the fixing clamp K2 on the first upper arm 5 in the state shown in Fig. 12. The height of the fixing clamp K3 is set such that the wire body 31 can be bent at a minimum bending radius. More specifically, the vertical distance between the fixing clamp K2 and the fixing clamp K4 for the tool wire body 312 is twice the cable bending radius. The length of the tool wire body 312 between the fixing clamp K2 and the fixing clamp K4 is set such that the bending radius is prevented from being reduced to below the minimum bending radius of the wire body 31 at the fixing clamp K3 on the first upper arm 5 when the rotational angle around the third axis is 90 degrees as shown n Fig. 14.

In the states shown in Figs. 12 and 13, the robot wire body 311 is fixed to the first upper arm 5 at a position directly below the tool wire body 312, and is fixed to the second upper arm 8 at a position directly above the tool wire body 312. The length of the robot wire body 312 between the fixing clamp K2 and the fixing clamp K4 is determined such that the robot wire body 311 extends along the robot wire body 311 without applying a compressive force to the tool wire body 312.

Since the movable range is about ±90 degrees and the lengths of the U-shaped portions of the cables are not long, the cables can be prevented from protruding or becoming slack by a large amount.

According to the present embodiment, the movable range of the second upper arm around the third rotation axis is assumed to be ±90 degrees. However, the movable range may, of course, also be wider or narrower than the above-described range. In such a case, the lengths of the wire bodies at the movable sections are adjusted in accordance with the movable range.

### Second Embodiment

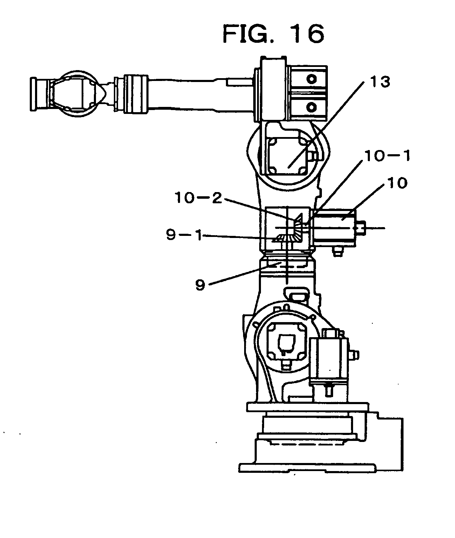

A difference between a second embodiment of the present invention shown in Fig. 16 and the first embodiment will be described with reference to Fig. 16.

The drive motor 10 for driving the second upper arm 8 is inclined by 90° with respect to the third rotation axis (3) and is attached to a rear surface of the robot. A driving force of a drive motor 10 is transmitted to a reduction gears 9 through a gear 10-2 attached to an end portion of an output shaft 10-1 and a gear 9-1 attached to an input shaft of the reduction gears 9. The rotation of the drive motor 10 is transmitted to the reduction gears 9 through the gear 10-1, which is a bevel gear, of the reduction gears and the input gear 9-1, which is also a bevel gear, of the reduction gears 9 that is integrated with the second upper arm 8. Accordingly, the second upper arm 8 is rotated to a predetermined angle.

In the case where the robot is to perform an operation in an operating area that is distant from the robot, the length of the second upper arm 8 is determined on the basis of the distance to the operating area. In the case where the robot is to perform an operation in an operating area that is near the robot, the length of the second upper arm 8 is determined such that the drive motor 10 can be replaced without causing an interference between the drive motor 10 and the front-arm drive motor 13.

Accordingly, in the case where the robot is to perform an operation in a narrow operating area, the length of the second upper arm 8 can be reduced. As a result, the height of the robot from the ground surface can be reduced compared to that of the robot according to the first embodiment. In other words, the lengths of the first upper arm and the second upper arm can be reduced to bring the tool provided at the wrist axis closer to the robot. As a result, the robot can perform the operation in an area closer to the robot itself. In addition, similar to the first embodiment, the displacements caused by the process of replacing the drive motor 10 can be corrected simply by making an adjustment so that the input gear 9-1 of the reduction gears 9 meshes with the gear 10-2 of the drive motor 10. Thus, the correction can be performed in a short time. As described above, the motor replacing process can be performed simply by detaching the drive motor 10, and no displacements of the joint axes of the robot occur. Therefore, the process of teaching the robot can be omitted and the manufacturing line can be restored in a short time.

### Third Embodiment

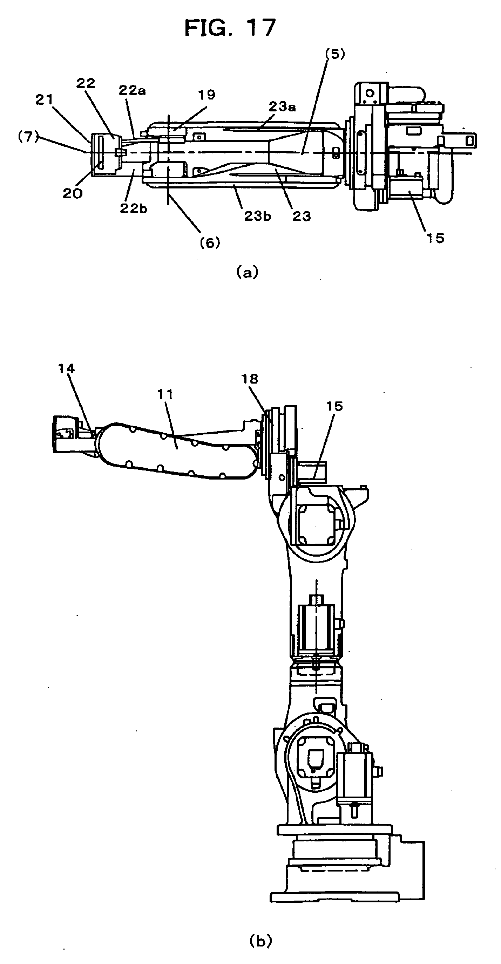

A difference between a third embodiment of the present invention shown in Fig. 17 and the first embodiment will be described with reference to Fig. 17.

In Fig. 17, (a) is a top view and (b) is a side view. An attachment surface on which a drive motor 15 for rotating a wrist assembly 14 about a fifth rotation axis (5) is located at an end of a front arm 11 that is opposite to the wrist assembly 14. The drive motor 15 is connected to an input shaft of a reduction gears 18 that is provided at an end face of the front arm 11 with a shaft and a gear or a pulley (not shown) provided therebetween. The reduction gears 18 is provided with a hole through which a cable can be inserted. The reduction gears 18 is secured to both the end face of the front arm 11 and an end portion of the wrist assembly 14, and is rotatably supported.

The wrist assembly 14 will be described in detail with reference to Fig. 17(a). The wrist assembly 14 includes a wrist base 23, a wrist 22, a flange 21, and reduction gearss 19 and 20. The wrist base 23 includes two members 23a and 23b and has a shape of a substantially U-shaped fork. A space through which a cable extends is provided between the two members. An end portion of the wrist 22 is provided on and connected to a distal end portion of the wrist base 23 with the reduction gears 19 provided therebetween such that the wrist 22 is turnable about a sixth rotation axis (6) that is perpendicular to and is on the same plane as the fifth rotation axis (5). The wrist 22 includes two members 22a and 22b that extend parallel to a seventh rotation axis (7), and has a shape of a two-tined fork such that a space through which a cable extends is provided between the two members. An end portion of the flange 21 is provided on and connected to a distal end portion of the wrist 22 with the reduction gears 20 provided therebetween such that the flange 21 is turnable about the seventh rotation axis (7) that is perpendicular to the sixth rotation axis (6). A drive motor for the wrist 22 and a drive motor for the flange (not shown) are connected to input shafts of the reduction gearss 19 and 20, respectively, through shafts and gears or pulleys (not shown).

## Claims

1. A vertical articulated robot comprising a base (1); a turning base (2) provided on the base (1) so as to be pivotable about a first rotation axis ((1)); a first upper arm (5) provided on the turning base (2) so as to be turnable about a second rotation axis ((2)) that is in a plane perpendicular to the first rotation axis ((1)); a second upper arm (8) provided on a distal end portion of the first upper arm (5) so as to be pivotable about a third rotation axis ((3)) that is perpendicular to the second rotation axis ((2)); a front arm (11) provided on a distal end portion of the second upper arm (8) so as to be turnable about a fourth rotation axis ((4)) that is in a plane perpendicular to the third rotation axis ((3)); a wrist assembly (14) mounted on a distal end portion of the front arm (11); and motors (4, 7, 10, 13, 15) that rotate the first upper arm, the second upper arm, the front arm, and the wrist assembly about the respective rotation axes, **characterized in that** the motor (10) that rotates the second upper arm (8) is mounted on a frame of the second upper arm (8) such that the motor is exposed to the outside.

2. The vertical articulated robot according to claim 1, wherein, in the state in which the first upper arm (5) is in a vertical orientation, the motor (10) that rotates the second upper arm (8) is mounted on the frame of the second upper arm (8) such that a rotating shaft of the motor (10) extends perpendicular to a ground surface and such that an output shaft (10-1) of the motor faces toward the ground surface.

3. The vertical articulated robot according to claim 1, wherein, in the state in which the first upper arm (5) is in a vertical orientation, the motor (10) that rotates the second upper arm (8) is mounted on a rear surface of the frame of the second upper arm (8) such that a rotating shaft (10-1) of the motor extends parallel to a ground surface.

4. The vertical articulated robot according to claim 1, wherein the distal end portion of the first upper arm (5) is provided with a reduction gears (9) that rotates the second upper arm (8) and is formed in an inverted L-shape.

5. The vertical articulated robot according to claim 1, wherein the second upper arm (8) is provided with the motor that rotates the second upper arm and is formed in an L-shape.

6. The vertical articulated robot according to claim 1, wherein, in the case where the robot is to perform an operation in an operating area that is distant from the robot, a length of the first upper arm (5) is determined on the basis of a distance to the operating area, and wherein, in the case where the robot is to perform an operation in an operating area that is near the robot, the length of the first upper arm (5) is determined such that a process of replacing a motor unit can be performed without causing an interference between the motor unit and an upper end portion of the first upper arm (5).

7. The vertical articulated robot according to claim 1, wherein, in the case where the robot is to perform an operation in an operating area that is distant from the robot, a length of the second upper arm (8) is determined on the basis of a distance to the operating area, and wherein, in the case where the robot is to perform an operation in an operating area that is near the robot, the length of the second upper arm (8) is determined such that a process of replacing a motor unit can be performed without causing an interference between the motor unit and the motor that drives the front arm (11).

8. The vertical articulated robot according to claim 1, wherein the motor (10) that rotates the second upper arm (8) is mounted on the frame of the second upper arm (8)such that a rotating shaft of the motor extends perpendicular to a ground surface and such that an output shaft (10-1) of the motor (10) faces toward the ground surface, and wherein the output shaft (10-1) of the motor is provided with an input gear (10-2) that meshes with the reduction gears (9) provided on the first upper arm.

9. The vertical articulated robot according to claim 1, wherein the motor (10) that rotates the second upper arm (8) is mounted on a rear surface of the frame of the second upper arm (8) such that a rotating shaft of the motor extends parallel to a ground surface, and wherein power is transmitted through a bevel gear train between an output shaft (10-1) of the motor and a reduction gears (9) provided on the first upper arm.

10. The vertical articulated robot according to claim 1, wherein a wire body (31) that extends from the turning base (2) is arranged so as to extend along a side surface of the first upper arm (5), is fixed to the side surface of the first upper arm (5) at a central section of the first upper arm (5), is bent horizontally onto a rear surface of the first upper arm (5), and is fixed to the rear surface of the first upper arm (5) at an upper end position of the first upper arm (5), and the wire body (31) is bent vertically in a U-shape so as to extend along a side surface of the second upper arm (8), is fixed to the second upper arm (8) at a lower end position of the second upper arm (8), is bent horizontally so as to extend along another side surface of the second upper arm (8), is bent vertically at the center of the another side surface of the second upper arm (8), is fixed to the second upper arm (8) at a central section of the second upper arm (8), is fixed to the front arm (11) at a lower end position of the front arm (11), and extends into the front arm.

## Patentansprüche

1. Vertikaler Gelenkroboter, umfassend einen Sockel (1); eine auf dem Sockel bereitgestellte Drehbasis (2), um drehbar um eine erste Rotationsachse ((1)) zu sein; einen an der Drehbasis (2) bereitgestellten ersten oberen Arm (5), um drehbar um eine zweite Rotationsachse ((2)) in einer Ebene rechtwinklig zu der ersten Rotationsachse ((1)) zu sein; einen an dem entfernten Endbereich des ersten oberen Arms (5) bereitgestellten zweiten oberen Arm (8), um drehbar um eine dritte Rotationsachse ((3)) rechtwinklig zu der zweiten Rotationsachse ((2)) zu sein; einen an dem entfernten Endbereich des zweiten oberen Arms (8) bereitgestellten Vorderarm (11), um drehbar um eine vierte Rotationsachse ((4)) in einer Ebene rechtwinklig zu der dritten Rotationsachse ((3)) zu sein; eine an einem entfernten Endbereich des Vorderarms (11) montierte Gelenkzusammenstellung (14); und Motoren (4, 7, 10, 13, 15), welche den ersten oberen Arm, den zweiten oberen Arm, den Vorderarm und die Gelenkzusammenstellung um die entsprechenden Rotationsachsen drehen, **dadurch gekennzeichnet, dass** der den zweiten Arm (8) drehende Motor (10) an einem Gehäuse des zweiten oberen Arms (8) derart montiert ist, dass der Motor nach außen freiliegt.

2. Vertikaler Gelenkroboter nach Anspruch 1, wobei in dem Zustand, in welchem der erste obere Arm (5) sich in einer vertikalen Orientierung befindet, der den zweiten oberen Arm (8) drehende Motor (10) an dem Gehäuse des zweiten oberen Arms (8) derart montiert ist, dass ein Rotationsschaft des Motors (10) sich rechtwinklig zu einer Bodenfläche erstreckt und ein Wellenausgang (10-1) des Motors zu der Bodenfläche zeigt.

3. Vertikaler Gelenkroboter nach Anspruch 1, wobei in dem Zustand in welchem der erstes obere Arm (5) sich in einer vertikalen Orientierung befindet, der den zweiten oberen Arm (8) drehende Motor (10) auf der rückwärtigen Oberfläche des Gehäuses des zweiten oberen Arms (8) derart montiert ist, dass ein Rotationsschaft (10-1) des Motors sich parallel zu einer Bodenfläche erstreckt.

4. Vertikaler Gelenkroboter nach Anspruch 1, wobei der entfernte Endbereich des ersten oberen Arms (5) mit einem den zweiten oberen Arm (8) drehenden Untersetzungsgetriebe (9) ausgestattet und in einer invertierten L-Form geformt ist.

5. Vertikaler Gelenkroboter nach Anspruch 1, wobei der zweite obere Arm (8) mit dem den zweiten oberen Arm drehenden Motor ausgestattet und in einer L-Form geformt ist.

6. Vertikaler Gelenkroboter nach Anspruch 1, wobei in dem Fall, in dem der Roboter eine Operation in einem von dem Roboter entfernten Operationsbereich ausführen soll, eine Länge des ersten oberen Arms (5) auf der Basis einer Distanz zu dem Operationsbereich bestimmt wird, und wobei in dem Fall, in dem der Roboter eine Operation in einem Operationsbereich nahe dem Roboter ausführen soll, eine Länge des ersten oberen Arms (5) derart bestimmt wird, dass ein Wechselvorgang einer Motoreinheit ohne die Verursachung einer Kollision zwischen der Motoreinheit und einem oberen Endbereich des ersten oberen Arms (5) durchgeführt werden kann.

7. Vertikaler Gelenkroboter nach Anspruch 1, wobei in dem Fall, in dem der Roboter eine Operation in einem von dem Roboter entfernten Operationsbereich durchführen soll, eine Länge des zweiten oberen Arms (8) auf der Basis einer Distanz zu dem Operationsbereich bestimmt wird, und wobei in dem Fall, in dem der Roboter eine Operation in einem Operationsbereich nahe dem Roboter durchführen soll, die Länge des zweiten oberen Arms (8) derart bestimmt wird, dass ein Vorgang des Ersetzens einer Motoreinheit ohne die Verursachung einer Kollision zwischen der Motoreinheit und dem den Vorderarm (11) antreibenden Motor durchgeführt werden kann.

8. Vertikaler Gelenkroboter nach Anspruch 1, wobei der den zweiten oberen Arm (8) drehende Motor (10) an dem Gehäuse des zweiten oberen Arms (8) derart montiert ist, dass ein Rotationsschaft des Motors sich rechtwinklig zu einer Bodenfläche und derart erstreckt, dass ein Wellenausgang (10-1) des Motors (10) in Richtung der Bodenfläche zeigt, und wobei der Wellenausgang (10-1) des Motors mit einem Antriebsritzel (10-2) ausgestattet ist, das mit dem an dem ersten oberen Arm bereitgestellten Untersetzungsgetriebe (9) ineinandergreift.

9. Vertikaler Gelenkroboter nach Anspruch 1, wobei der den zweiten oberen Arm (8) drehende Motor (10) an einer rückwärtigen Oberfläche des Gehäuses des zweiten oberen Arms (8) derart montiert ist, dass ein Rotationsschaft des Motors sich parallel zu einer Bodenfläche erstreckt, und wobei Leistung mittels eines Kegelradgetriebes zwischen einem Wellenausgang (10-1) des Motors und einem an dem ersten oberen Arm bereitgestellten Untersetzungsgetriebe (9) übertragen wird.

10. Vertikaler Gelenkroboter nach Anspruch 1, wobei ein von der Drehbasis (2) sich erstreckender Kabelkörper (31) so angeordnet ist, dass er sich entlang einer Seitenfläche des ersten oberen Arms (5) erstreckt, an der Seitenfläche des ersten oberen Arms (5) an einem zentralen Bereich des ersten oberen Arms (5) befestigt ist, horizontal an eine rückwärtige Oberfläche des ersten oberen Arms (5) gebogen ist, und an der rückwärtigen Oberfläche des ersten oberen Arms (5) an einer oberen Endposition des ersten oberen Arms (5) befestigt ist, und der Kabelkörper (31) vertikal in einer U-Form so gebogen ist, dass er sich entlang einer Seitenfläche des zweiten oberen Arms (8) erstreckt, an dem zweiten Arm (8) an einer unteren Endposition des zweiten oberen Arms (8) befestigt ist, horizontal so gebogen ist, dass er sich entlang einer anderen Seitenfläche des zweiten oberen Arms (8) erstreckt, an dem Zentrum der anderen Seitenfläche des zweiten oberen Arms (8) vertikal gebogen ist, an den zweiten oberen Arm (8) an einem Zentralbereich des zweiten oberen Arms (8) befestigt ist, an dem Vorderarm (11) an einer unteren Endposition des Vorderarms (11) befestigt ist, und sich in den Vorderarm erstreckt.

## Revendications

1. Robot vertical articulé comprenant une base (1) ; une base tournante (2) agencée sur la base (1) de manière à pouvoir pivoter autour d'un premier axe de rotation ((1)) ; un premier bras supérieur (5) agencé sur la base tournante (2) de manière à pouvoir tourner autour d'un deuxième axe de rotation ((2)) qui est dans un plan perpendiculaire au premier axe de rotation ((1)) ; un deuxième bras supérieur (8) agencé sur une partie d'extrémité distale du premier bras supérieur (5) de manière à pouvoir pivoter autour d'un troisième axe de rotation ((3)) qui est perpendiculaire au deuxième axe de rotation ((2)) ; un bras avant (11) agencé sur une partie d'extrémité distale du deuxième bras supérieur (8) de manière à pouvoir tourner autour d'un quatrième axe de rotation ((4)) qui est dans un plan perpendiculaire au troisième axe de rotation ((3)) ; un ensemble de poignet (14) monté sur une partie d'extrémité distale du bras avant (11) ; et des moteurs (4, 7, 10, 13, 15) qui font tourner le premier bras supérieur, le deuxième bras supérieur, le bras avant, et l'ensemble de poignet autour des axes de rotation respectifs, **caractérisé en ce que** le moteur (10) qui fait tourner le deuxième bras supérieur (8) est monté sur un châssis du deuxième bras supérieur (8) de telle sorte que le moteur est exposé à l'extérieur.

2. Robot vertical articulé selon la revendication 1, dans lequel, dans l'état où le premier bras supérieur (5) présente une orientation verticale, le moteur (10) qui fait tourner le deuxième bras supérieur (8) est monté sur le châssis du deuxième bras supérieur (8) de telle sorte qu'un arbre tournant du moteur (10) s'étend perpendiculairement à une surface du sol et de telle sorte qu'un arbre de sortie (10-1) du moteur se trouve face à la surface du sol.

3. Robot vertical articulé selon la revendication 1, dans lequel, dans l'état où le premier bras supérieur (5) présente une orientation verticale, le moteur (10) qui fait tourner le deuxième bras supérieur (8) est monté sur une surface arrière du châssis du deuxième bras supérieur (8) de telle sorte qu'un arbre tournant (10-1) du moteur s'étend parallèlement à la surface du sol.

4. Robot vertical articulé selon la revendication 1, dans lequel la partie d'extrémité distale du premier bras supérieur (5) comporte des engrenages de réduction (9) qui font tourner le deuxième bras supérieur (8) et est réalisée en une forme de L inversé.

5. Robot vertical articulé selon la revendication 1, dans lequel le deuxième bras supérieur (8) est équipé du moteur qui fait tourner le deuxième bras supérieur et est réalisé en une forme de L.

6. Robot vertical articulé selon la revendication 1, dans lequel, dans le cas où le robot doit exécuter une opération dans une zone de travail qui est distante du robot, une longueur du premier bras supérieur (5) est déterminée sur la base d'une distance par rapport à la zone de travail, et dans lequel, dans le cas où le robot doit exécuter une opération dans une zone de travail qui est proche du robot, la longueur du premier bras supérieur (5) est déterminée de telle sorte qu'une opération de remplacement d'une unité de moteur peut être mise en oeuvre sans provoquer d'interférence entre l'unité de moteur et une partie d'extrémité supérieure du premier bras supérieur (5).

7. Robot vertical articulé selon la revendication 1, dans lequel, dans le cas où le robot doit exécuter une opération dans une zone de travail qui est distante du robot, une longueur du deuxième bras supérieur (8) est déterminée sur la base d'une distance par rapport à la zone de travail, et dans lequel, dans le cas où le robot doit exécuter une opération dans une zone de travail qui est proche du robot, la longueur du deuxième bras supérieur (8) est déterminée de telle sorte qu'une opération de remplacement d'une unité de moteur peut être mise en oeuvre sans provoquer d'interférence entre l'unité de moteur et le moteur qui entraîne le bras avant (11).

8. Robot vertical articulé selon la revendication 1, dans lequel le moteur (10) qui fait tourner le deuxième bras supérieur (8) est monté sur le châssis du deuxième bras supérieur (8) de telle sorte qu'un arbre tournant du moteur s'étend perpendiculairement à une surface du sol et de telle sorte qu'un arbre de sortie (10-1) du moteur (10) se trouve face à la surface du sol, et dans lequel l'arbre de sortie (10-1) du moteur comporte un engrenage d'entrée (10-2) qui engrène avec les engrenages de réduction (9) agencés sur le premier bras supérieur.

9. Robot vertical articulé selon la revendication 1, dans lequel le moteur (10) qui fait tourner le deuxième bras supérieur (8) est monté sur une surface arrière du châssis du deuxième bras supérieur (8) de telle sorte qu'un arbre tournant du moteur s'étend parallèlement à une surface du sol, et dans lequel la puissance est transmise par l'intermédiaire d'un train d'engrenage conique entre un arbre de sortie (10-1) du moteur et des engrenages de réduction (9) agencés sur le premier bras supérieur.

10. Robot vertical articulé selon la revendication 1, dans lequel un corps de câble (31) qui s'étend à partir de la base tournante (2) est agencé de manière à s'étendre suivant une surface latérale du premier bras supérieur (5), est fixé sur la surface latérale du premier bras supérieur (5) au niveau d'une section centrale du premier bras supérieur (5), est courbé horizontalement sur une surface arrière du premier bras supérieur (5), et est fixé sur la surface arrière du premier bras supérieur (5) à une position extrême supérieure du premier supérieur bras (5), et le corps de câble (31) est courbé verticalement en une forme de U de manière à s'étendre le long d'une surface latérale du deuxième bras supérieur (8), est fixé sur le deuxième bras supérieur (8) à une position extrême inférieure du deuxième bras supérieur (8), est courbé horizontalement de manière à s'étendre le long d'une autre surface latérale du deuxième bras supérieur (8), est courbé verticalement au niveau du centre de l'autre surface latérale du deuxième bras supérieur (8), est fixé sur le deuxième bras supérieur (8) au niveau d'une section centrale du deuxième bras supérieur (8), est fixé sur le bras avant (11) à une position extrême inférieure du bras avant (11), et s'étend dans le bras avant.
